# EUROPÄISCHE PATENTSCHRIFT

(11) **EP 4 018 425 B1**
(45) Veröffentlichungstag und Bekanntmachung des Hinweises auf die Patenterteilung: **05.04.2023**
(21) Anmeldenummer: 20790228.9
(22) Anmeldetag: 08.10.2020
(51) Int. Cl.: G08G 1/0965, G08G 1/01, G08G 1/16, G05D 1/02, B60W 40/04, B60W 30/095

(54) **VERFAHREN ZUM VORHERSAGEN EINES VERHALTENS EINES ZIELFAHRZEUGS**
METHOD FOR PREDICTING THE BEHAVIOUR OF A TARGET VEHICLE
PROCÉDÉ DE PRÉDICTION DU COMPORTEMENT D'UN VÉHICULE CIBLE

(30) Priorität: 11.10.2019 DE 102019215680
(43) Veröffentlichungstag der Anmeldung: 29.06.2022
(73) Patentinhaber: Audi AG, 85045 Ingolstadt (DE)
(72) Erfinder: PLECHINGER, Jörg, 80469 München (DE); HEHN, Thorsten, 85055 Ingolstadt (DE)
(74) Vertreter: RDL Patentanwälte PartG mbB
(86) Internationale Anmeldenummer: PCT/EP2020/078204
(87) Internationale Veröffentlichungsnummer: WO 2021/069541

(56) Entgegenhaltungen:
- EP-A1- 2 615 598
- DE-A1-102010 006 084
- DE-A1-102016 113 903
- DE-A1-102017 129 501
- US-A1- 2016 357 188

## Beschreibung

Die Erfindung betrifft ein Verfahren und ein System zum Vorhersagen eines Verhaltens eines Zielfahrzeugs.

Es ist grundsätzlich möglich, dass ein im Straßenverkehr befindliches Fahrzeug von Sensoren eines anderen Fahrzeugs erfasst und auf Grundlage dessen sein Verhalten analysiert wird.

Die Druckschrift EP 2 096 612 B1 beschreibt ein System und ein Computerprogramm zur Erstellung eines Routensteuerungsplans.

Ein Verfahren zum Steuern einer Lichtverteilung eines Scheinwerfers eines Fahrzeugs ist aus der Druckschrift EP 2 957 462 A1 bekannt.

Die Druckschrift WO 2019/138485 A1 beschreibt ein Verfahren zur Vorhersage einer Kollision.

Die Druckschrift US 2016/0357188 A1 beschreibt eine Maßnahme zum Betreiben eines intelligenten Fahrzeugs, wobei ein 3D-Modell eines Sichtfelds eines Sensors des Fahrzeugs erzeugt wird. Außerdem werden Informationen von benachbarten Fahrzeugen empfangen, um einen toten Winkel in dem Sichtfeld des Sensors und des Fahrers des intelligenten Fahrzeugs zu kompensieren. Weiterhin werden Verkehrsinformationen empfangen und eine Vielzahl von 3D-Modellen auf Grundlage von empfangenen Verkehrsinformationen und Informationen über den toten Winkel angepasst. Die Vielzahl von 3D-Modellen wird aggregiert, um ein umfassendes 3D-Modell zu erzeugen, das mit detaillierten Karteninformationen kombiniert wird.

Vor diesem Hintergrund war es eine Aufgabe, ein Verhalten eines Fahrzeugs im Straßenverkehr vorherzusagen.

Die Aufgabe wird durch ein Verfahren und ein System mit den Merkmalen der unabhängigen Patentansprüche gelöst. Ausführungsformen des Verfahrens und des Systems gehen aus den abhängigen Patentansprüchen und der Beschreibung hervor.

Das erfindungsgemäße Verfahren ist zum Vorhersagen eines Verhaltens eines bspw. als Kraftfahrzeug ausgebildeten Zielfahrzeugs in einem Manöverraum, bspw. im Straßenverkehr, vorgesehen. Dabei werden für das Zielfahrzeug in dem Manöverraum mehrere zukünftig durchführbare Manöver vorgesehen und/oder berücksichtigt, wobei das im Manöverraum befindliche Zielfahrzeug von mehreren Beobachtungsfahrzeugen, bspw. von weiteren Kraftfahrzeugen, beobachtet wird, wobei für jedes zukünftig durchführbare Manöver des Zielfahrzeugs auf Grundlage einer von dem jeweiligen Beobachtungsfahrzeug durchgeführten Beobachtung eine Einzelwahrscheinlichkeitsverteilung für das jeweils zukünftig durchführbare Manöver bestimmt und/oder ermittelt wird. Weiterhin wird für jedes zukünftig durchführbare Manöver des Zielfahrzeugs aus mehreren, insbesondere sämtlichen Einzelwahrscheinlichkeitsverteilungen eine Gesamtwahrscheinlichkeitsverteilung für das jeweils zukünftig durchführbare Manöver des Zielfahrzeugs bestimmt und/oder ermittelt.

Erfindungsgemäß wird das Zielfahrzeug von i Beobachtungsfahrzeugen beobachtet, wobei für das Zielfahrzeug m vorhersehbare und/oder vorherzusehende Manöver vorgesehen und/oder berücksichtigt werden, wobei für ein jeweiliges n-tes Manöver, mit 1 <= n <= m, eine Gesamtwahrscheinlichkeitsverteilung Pr (M = Mn | Beobachtung_1,..., Beobachtung_i) ermittelt wird, die auf i Beobachtungen beruht.

Hierbei ist es möglich, dass von einem j-ten Beobachtungsfahrzeug aufgrund einer j-ten Beobachtung_j des Zielfahrzeugs, wobei 1 <= j <= i, eine j-te Gesamtwahrscheinlichkeitsverteilung Pr (M = Mn | BeobachtungJ) für das n-te Manöver ermittelt und an ein weiteres j+1-tes Beobachtungsfahrzeug übermittelt wird, von dem unter Berücksichtigung einer j+1-ten BeobachtungJ+1 des Zielfahrzeugs für das n-te Manöver eine j+1-te Gesamtwahrscheinlichkeitsverteilung Pr (M = Mn | Beobachtung_j, BeobachtungJ+1) ermittelt wird.

Somit ist es möglich, dass die Gesamtwahrscheinlichkeitsverteilung für das n-te Manöver durch mehrere, bspw. i Beobachtungen unterschiedlicher Beobachtungsfahrzeuge iterativ bestimmt wird, wobei diese Gesamtwahrscheinlichkeitsverteilung für das n-te Manöver umso genauer ist, je mehr Beobachtungen von unterschiedlichen Beobachtungsfahrzeugen durchgeführt werden.

Je nach Definition kann sich für das n-te Manöver eine j+1-te Gesamtwahrscheinlichkeitsverteilung (j+1) aus einer j-ten Gesamtwahrscheinlichkeitsverteilung (j) in Kombination einer j+1-ten Einzelwahrscheinlichkeitsverteilung (j+1) ergeben.

Ergänzend kann für jede durchgeführte Beobachtung, die bereits von einem jeweiligen Beobachtungsfahrzeug bestimmt und für die Gesamtwahrscheinlichkeitsverteilung berücksichtigt worden ist, ein Hashwert bereitgestellt und/oder erzeugt werden, mit dem darauf hingewiesen wird, dass diese Beobachtung bereits für die Gesamtwahrscheinlichkeitsverteilung berücksichtigt worden ist.

Das Zielfahrzeug wird von den Beobachtungsfahrzeugen aus unterschiedlichen Perspektiven beobachtet.

Das Verfahren kann von mindestens einem automatisch oder manuell gesteuerten Beobachtungsfahrzeug, üblicherweise von mehreren automatisch oder manuell gesteuerten Beobachtungsfahrzeugen, für ein manuell oder automatisch gesteuertes Zielfahrzeug durchgeführt werden.

Bei dem Verfahren kann als mindestens ein Manöver eine Richtung einer Fahrt des Zielfahrzeugs und/oder eine Geschwindigkeit, bspw. auch eine Änderung der Geschwindigkeit und somit eine Beschleunigung des Zielfahrzeugs berücksichtigt werden, wobei für ein jeweiliges Manöver eine Fahrt vorwärts, bspw. geradeaus, eine Fahrt nach links, eine Fahrt nach rechts und/oder eine Fahrt rückwärts berücksichtigt wird, und wobei für das jeweilige Manöver eine Aufrechterhaltung einer konstanten Geschwindigkeit, die Beschleunigung und/oder eine Bremsung, ggf. ein Stillstand berücksichtigt werden.

Außerdem ist es möglich, dass die bspw. m vorgesehenen und/oder berücksichtigten bzw. zu berücksichtigenden Manöver aus einer größeren Anzahl möglicher Manöver ausgewählt werden, wobei das Verhalten des Zielfahrzeugs nur aufgrund ausgewählter, bspw. relevanter Manöver vorhergesagt wird.

Das erfindungsgemäße System ist zum Vorhersagen eines Verhaltens eines Zielfahrzeugs in einem Manöverraum ausgebildet und weist Sensoren, die in mehreren Beobachtungsfahrzeugen angeordnet sind, und mindestens eine Recheneinheit, die in mindestens einem Beobachtungsfahrzeug angeordnet ist, auf. In der Regel ist in jedem Beobachtungsfahrzeug zumindest ein Sensor zum Erfassen einer Umgebung des Beobachtungsfahrzeugs angeordnet. Außerdem kann jedes Beobachtungsfahrzeug eine Recheneinheit aufweisen. Für das Zielfahrzeug sind in dem Manöverraum mehrere zukünftig durchführbare Manöver vorgesehen, wobei jeweils mindestens ein Sensor jedes Beobachtungsfahrzeugs dazu ausgebildet ist, das im Manöverraum befindliche Zielfahrzeug zu beobachten. Die mindestens eine Recheneinheit ist dazu ausgebildet, für jedes zukünftig durchführbare Manöver des Zielfahrzeugs auf Grundlage einer von dem mindestens einen Sensor des jeweiligen Beobachtungsfahrzeugs durchgeführten Beobachtung eine Einzelwahrscheinlichkeitsverteilung für das jeweils zukünftig durchführbare Manöver zu bestimmen und/oder zu ermitteln und weiterhin aus mehreren, insbesondere aus sämtlichen Einzelwahrscheinlichkeitsverteilungen eine Gesamtwahrscheinlichkeitsverteilung für das jeweils zukünftig durchführbare Manöver des Zielfahrzeugs zu bestimmen und/oder zu ermitteln.

Jedes Beobachtungsfahrzeug kann mindestens einen Sensor aufweisen, der dazu ausgebildet ist, elektromagnetische Wellen zu empfangen. Dabei ist es möglich, dass mindestens ein Sensor als optischer Sensor, bspw. als Kamera, ausgebildet ist. Alternativ oder ergänzend ist es möglich, dass mindestens ein Sensor als Radarsensor, als Infrarotsensor oder als Lidarsensor ausgebildet ist. Ein derartiger Sensor kann auch als Ultraschallsensor ausgebildet sein. Es ist möglich, dass ein jeweiliges Beobachtungsfahrzeug mehrere Sensoren zum Erfassen der Umgebung aufweist, wobei diese Sensoren gleich oder unterschiedlich ausgebildet sein können. In einer Ausgestaltung des vorgestellten Verfahrens mit einer Ausgestaltung des vorgestellten Systems ist es nun möglich, dass von dem Zielfahrzeug von den Sensoren, die an den Beobachtungsfahrzeugen angeordnet sind, aus unterschiedlichen Perspektiven Beobachtungen durchgeführt werden. Diese einzelnen sensorisch durchgeführten Beobachtungen werden von der mindestens einen Recheneinheit ausgewertet. Dabei ist es möglich, dass auf Grundlage jeweils einer Beobachtung eine Einzelwahrscheinlichkeit für ein jeweiliges Manöver ermittelt wird.

Weiterhin weist jedes bei dem Verfahren beteilige Beobachtungsfahrzeug ein Kommunikationsgerät zum Senden und Empfangen einer sensorisch ermittelten Beobachtung, einer jeweiligen Einzelwahrscheinlichkeitsverteilung auf Grundlage einer jeweiligen Beobachtung und/oder der iterativ bereitgestellten Gesamtwahrscheinlichkeitsverteilung auf.

Üblicherweise weist jedes Beobachtungsfahrzeug eine Recheneinheit auf, die dazu ausgebildet ist, auf Grundlage der jeweiligen Beobachtung des Zielfahrzeugs die Einzelwahrscheinlichkeit für ein jeweiliges Manöver zu ermitteln. Außerdem kann jede Recheneinheit dazu ausgebildet sein, nicht nur die jeweilige Einzelwahrscheinlichkeitsverteilung sondern unter Berücksichtigung einer j-1-ten Gesamtwahrscheinlichkeitsverteilung, die von einem der anderen Beobachtungsfahrzeuge bereitgestellt wird, und unter Berücksichtigung einer j-ten Einzelwahrscheinlichkeitsverteilung eine j-te Gesamtwahrscheinlichkeitsverteilung zu ermitteln. Falls nur ein Teil sämtlicher Beobachtungsfahrzeuge eine jeweilige Recheneinheit zum Bestimmen einer Einzelwahrscheinlichkeitsverteilung und/oder einer Gesamtwahrscheinlichkeitsverteilung aufweist, ist es möglich, dass einzelne Beobachtungen von Beobachtungsfahrzeugen ohne Recheneinheiten zu einem jeweiligen Beobachtungsfahrzeug mit Recheneinheit übermittelt werden, wobei diese Recheneinheit dazu ausgebildet ist, die Gesamtwahrscheinlichkeitsverteilung unter Berücksichtigung unterschiedlicher Beobachtungen von unterschiedlichen Beobachtungsfahrzeugen zu ermitteln.

Unabhängig davon wie die Gesamtwahrscheinlichkeitsverteilung aus unterschiedlichen Beobachtungen und/oder Einzelwahrscheinlichkeiten im Rahmen des Verfahrens berechnet wird, ist es insgesamt möglich, dass durch mehrere Beobachtungsfahrzeuge für das Zielfahrzeug eine kooperative Manöver-Prädiktion durchgeführt wird. Die Gesamtwahrscheinlichkeitsverteilung, mindestens eine Einzelwahrscheinlichkeitsverteilung und/oder mindestens eine einzelne Beobachtung wird bzw. werden zwischen den Fahrzeugen über Signale ausgetauscht, die über elektromagnetische Wellen transportiert werden. Zum funkgestützten Austausch der Signale wird eine C2X(car-to-everything)- bzw. V2X(vehicle-to-everything)-Funktionalität verwendet, die einen Austausch von Signalen zwischen einzelnen Fahrzeugen, hier von den Beobachtungsfahrzeugen, aber auch zwischen Fahrzeugen und anderen Vorrichtungen zulässt.

In Ausgestaltung ist es möglich, dass die Beobachtungsfahrzeuge automatisch fahren. Weiterhin ist es möglich, dass die Beobachtungsfahrzeuge das Verhalten von dem Zielfahrzeug als weiteren Verkehrsteilnehmer gemeinschaftlich besser prädizieren können als hierfür ein einzelnes Fahrzeug imstande ist. Ein vorherzusagendes bzw. zu prädizierendes Manöver wird somit nicht durch ein einziges Beobachtungsfahrzeug sondern durch mehrere, insbesondere sämtliche Beobachtungsfahrzeuge in einer Umgebung des Zielfahrzeugs bestimmt. Hierbei wird berücksichtigt, dass jedes einzelne Beobachtungsfahrzeug unter Nutzung seines mindestens einen Sensors und/oder seiner Recheneinheit zu der zu ermittelnden Gesamtwahrscheinlichkeitsverteilung jeweils mindestens eine unabhängige verzerrte Beobachtung für das vorherzusagende Manöver beisteuern kann. Dabei können alle Beobachtungen der Beobachtungsfahrzeuge verzerrt sein, wobei sich Verzerrungen der Beobachtungen unabhängig voneinander ergeben. Hierbei ist es möglich, dass eine jeweilige Beobachtung auf mindestens einer Aufnahme, üblicherweise auf mehreren Aufnahmen, beruhen kann, die von jeweils einem als Kamera ausgebildeten Sensor aufgenommen werden. Hierbei werden Aufnahmen von unterschiedlichen Sensoren aus unterschiedlichen Blickwinkeln und/oder Perspektiven aufgenommen.

Die einzelnen Beobachtungen und/oder Einzelwahrscheinlichkeitsverteilungen sämtlicher Beobachtungsfahrzeuge werden erfindungsgemäß über die V2X-Kommunikation, bspw. eine V2V(vehicle-to-vehicle)-Kommunikation, zwischen den einzelnen Beobachtungsfahrzeugen aufgesammelt und fusioniert, wobei eine Vorhersage des jeweiligen Manövers verbessert wird. Außerdem wird eine derartige verbesserte Vorhersage bzw. Prädiktion des jeweiligen Manövers über die V2X-Kommunikation an manuell gesteuerte und somit nicht-autonom fahrende weitere Fahrzeuge übermittelt und somit die Gesamtwahrscheinlichkeitsverteilung für ein jeweiliges Manöver mit anderen manuell gesteuerten Fahrzeugen geteilt. Auf Grundlage der Gesamtwahrscheinlichkeitsverteilung können dann in einem jeweiligen Fahrzeug Warnhinweise bereitgestellt oder andere schützende Maßnahmen autonom, teilautonom oder fahrergestützt durchgeführt werden.

Das vorgestellte Verfahren kann in Ausgestaltung ähnlich einem Ansatz zur Belief-Propagation durchgeführt werden. Hierbei ist möglich, dass mindestens ein Beobachtungsfahrzeug für eine kooperative Prädiktion eines Manövers des Zielfahrzeugs durch die V2X-Kommunikation an mindestens ein anderes Beobachtungsfahrzeug eine Mitteilung bzw. Nachricht aussendet. Diese Mitteilung umfasst eine Information über den Manöverraum, bspw. einer Anordnung und Ausbreitung des Manöverraums im Ortsraum und einer Liste aller in dem Manöverraum durchführbaren bzw. möglichen Manöver, die von dem Zielfahrzeug realisiert werden können. Außerdem wird von jedem Beobachtungsfahrzeug eigens eine Einzelwahrscheinlichkeitsverteilung für jedes mögliche Manöver im Manöverraum ermittelt, wobei jede Einzelwahrscheinlichkeitsverteilung mindestens auf einer Beobachtung beruht, bei der das Zielfahrzeug von dem Beobachtungsfahrzeug erfasst worden ist. Außerdem können für die Beobachtungen Hashwerte ermittelt werden, die bereits zum Berechnen der Gesamtwahrscheinlichkeitsverteilung berücksichtigt worden sind.

Im Bereich des automatischen Fahrens bzw. Verkehrs ist es erforderlich, dass sich automatisch fahrende Fahrzeuge, insbesondere automatisch fahrende Beobachtungsfahrzeuge, auch in einem Mischverkehr, in dem sich auch manuell gesteuerte Fahrzeuge bewegen können, gut zurecht finden können. Im Rahmen des Verfahrens ist es möglich, durch Klassifikation der Fahrzeuge zwischen automatisch fahrenden Fahrzeugen, bspw. Beobachtungsfahrzeugen, und manuell gefahrenen bzw. gesteuerten Fahrzeugen, bspw. Zielfahrzeugen zu unterscheiden. Dabei ist es möglich, unter Berücksichtigung von Beobachtungen mehrerer, insbesondere sämtlicher Beobachtungsfahrzeuge für jedes manuell gefahrene Fahrzeug eine Gesamtwahrscheinlichkeit eines jeweils durchführbaren Manövers zu ermitteln. Weiterhin ist vorgesehen, dass im Bereich einer Signalverarbeitung für Funksysteme zur beinahe-optimalen Dekodierung für Kanalkodierungsverfahren eine Methode zur Belief-Propagation eingesetzt wird. Dabei wird eine Vermutung über einen Ausgang eines Zufallsexperiments zwischen verschiedenen Parteien iterativ prozessiert und so eine Vermutung verbessert. Das vorgestellte Verfahren kann auf der Belief-Propagation beruhen, wobei von mehreren, insbesondere sämtlichen Beobachtungsfahrzeugen eine kooperative Prädiktion von Manövern des Zielfahrzeugs ermittelt werden kann. Die Belief-Propagation ist in dem Artikel "Low Density Parity Check Codes" von Rajesh Poddar (ELE539B Spring 2007 Midterm Paper) beschrieben.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird unter Bezugnahme auf die Zeichnung schematisch und ausführlich beschrieben.

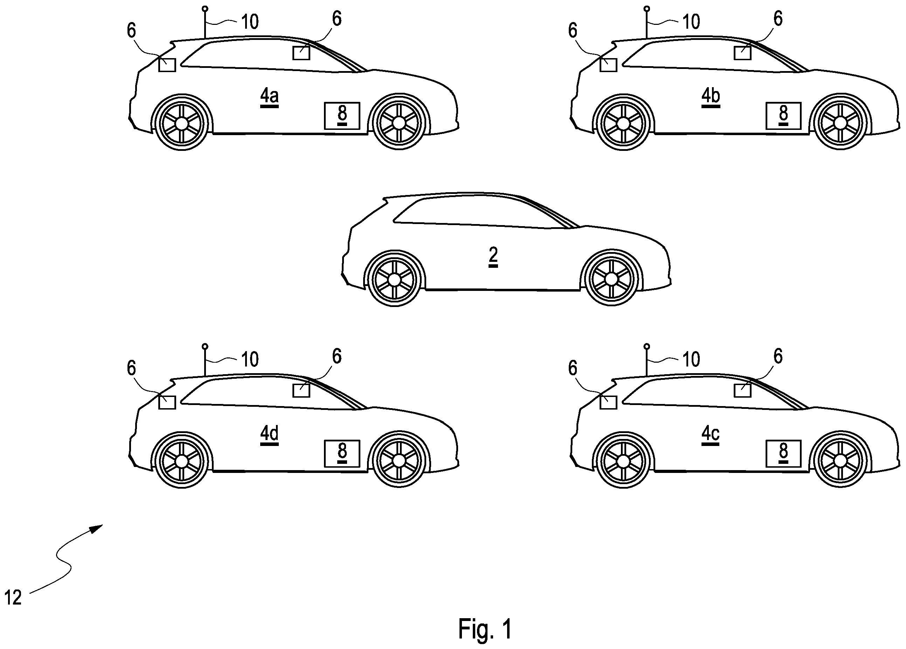

Figur 1 zeigt in schematischer Darstellung eine Ausführungsform des erfindungsgemäßen Systems bei Durchführung einer Ausführungsform des erfindungsgemäßen Verfahrens.

Figur 1 zeigt in schematischer Darstellung ein hier als Zielfahrzeug 2 ausgebildetes Kraftfahrzeug, das sich in einem Manöverraum, hier im Straßenverkehr mit weiteren Kraftfahrzeugen befindet oder bewegt, die hier als Beobachtungsfahrzeuge 4a, 4b, 4c, 4d ausgebildet sind. Dabei weist hier jedes Beobachtungsfahrzeug 4a, 4b, 4c, 4d jeweils mehrere Sensoren 6 zum Beobachten und/oder Erfassen einer Umgebung des jeweiligen Beobachtungsfahrzeugs 4a, 4b, 4c, 4d auf. Außerdem weist jedes Beobachtungsfahrzeug 4a, 4b, 4c, 4d eine Recheneinheit 8 und ein Kommunikationsgerät 10 auf, von dem hier lediglich eine Antenne gezeigt ist, wobei ein jeweiliges Kommunikationsgerät 10 dazu ausgebildet ist, eine V2X(Fahrzeug-zu-allem bzw. vehicle-to-everything)-Kommunikation, zumindest eine V2V-Kommunikation zwischen einzelnen Beobachtungsfahrzeugen 4a, 4b, 4c, 4d, durchzuführen. Dabei ist hier vorgesehen, dass die vorgestellten Sensoren 6, Recheneinheiten 8 und Kommunikationsgeräte 10, die über mehrere Beobachtungsfahrzeuge 4a, 4b, 4c, 4d verteilt sind, je nach Definition auch als Komponenten der Ausführungsform des erfindungsgemäßen Systems 10 ausgebildet sein können.

Bei der hier vorgestellten Ausführungsform des erfindungsgemäßen Verfahrens wird ein Verhalten des Zielfahrzeugs 2 in dem Manöverraum vorhergesagt. Dabei ist es möglich, dass das Zielfahrzeug 2 in dem Manöverraum unterschiedliche Manöver durchführen kann, die bspw. durch Änderung einer Richtung des Zielfahrzeugs 2, bspw. durch Geradeausfahren oder Lenken nach links oder rechts, und/oder durch Änderung einer Geschwindigkeit des Zielfahrzeugs 2, bspw. durch Beschleunigen oder Bremsen, definiert sein können.

Bei der Ausführungsform des Verfahrens wird zu einem Zeitpunkt von mindestens einem Sensor 6 des ersten Beobachtungsfahrzeugs 4a eine erste Beobachtung (Beobachtung_1) aus einer ersten Perspektive gemacht. Weiterhin wird von mindestens einem Sensor 6 des zweiten Beobachtungsfahrzeugs 4b aus einer zweiten Perspektive eine zweite Beobachtung (Beobachtung_2) des Zielfahrzeugs 2 gemacht. Jeweils unabhängig davon wird auch von jeweils einem der zwei weiteren Beobachtungsfahrzeuge 4c, 4d aus einer jeweiligen Perspektive, von der aus mindestens ein Sensor 6 des jeweiligen Beobachtungsfahrzeugs 4c, 4d das Zielfahrzeug 2 erfassen kann, eine dritte Beobachtung (Beobachtung_3) und eine vierte Beobachtung (Beobachtung_4) gemacht.

Außerdem ist hier vorgesehen, dass für das Zielfahrzeug 2 in dem Manöverraum hier vier unterschiedliche Manöver M1, M2, M3, M4 aus einer ggf. größeren Anzahl an möglichen Manövern M1, M2, M3, M4, M5, M6,... ausgewählt und/oder berücksichtigt werden, wobei für jedes dieser ausgewählten Manöver M1, M2, M3, M4 auf Grundlage von Beobachtungen (Beobachtung_1, Beobachtung_2, Beobachtung_3, Beobachtung_4) sämtlicher Beobachtungsfahrzeuge 4a, 4b, 4c, 4d eine kooperative Gesamtwahrscheinlichkeitsverteilung unter Berücksichtigung der unterschiedlichen Perspektiven der Beobachtungsfahrzeuge 4a, 4b, 4c, 4d relativ zu dem Zielfahrzeug 2 bereitgestellt wird.

Hier sind insgesamt n = 4 Manöver zu berücksichtigen, wobei für das Zielfahrzeug 2 insgesamt i = 4 Beobachtungen durchgeführt werden. Dabei wird von einem j-ten Beobachtungsfahrzeug 4a, 4b, 4c, 4d eine j-te Beobachtung (Beobachtung_j) durchgeführt, wobei 1 <= j <= i mit i = 4 gilt. Hierbei wird eine jeweilige j-te Beobachtung von dem mindestens einen Sensor 6 des j-ten Beobachtungsfahrzeug 4a, 4b, 4c, 4d bereitgestellt und/oder erfasst. Auf Grundlage einer jeden j-ten Beobachtung wird von der Recheneinheit 8 des jeweiligen j-ten Beobachtungsfahrzeug 4a, 4b, 4c, 4d für jedes der insgesamt n = 4 Manöver eine Einzelwahrscheinlichkeitsverteilung bestimmt und/oder ermittelt, bspw. berechnet. Somit wird für ein jeweiliges n-tes Manöver auf Grundlage einer j-ten Beobachtung des j-ten Beobachtungsfahrzeugs 4a, 4b, 4c, 4d eine Einzelwahrscheinlichkeitsverteilung Pr (M = Mn | Beobachtung_j) ermittelt und/oder bestimmt, aus der eine Gesamtwahrscheinlichkeitsverteilung Pr (M = Mn |..., Beobachtung_j,...) auf Grundlage mehrerer Beobachtungen_j und/oder Einzelwahrscheinlichkeitsverteilungen Pr (M = Mn | Beobachtung_j) ermittelt wird. Außerdem wird für jede j-te Beobachtung BeobachtungJ auch noch ein Hashwert hash_BeobachtungJ bereitgestellt.

In der hier vorgestellten Ausführungsform des Verfahrens werden von dem ersten Beobachtungsfahrzeug 4a nachfolgende Informationen, je nach Definition Gesamtwahrscheinlichkeitsverteilungen oder Einzelwahrscheinlichkeitsverteilungen Pr (M = Mn | Beobachtung_1), für die n = 4 möglichen Manöver, die auf einer ersten Beobachtung_1 des ersten Beobachtungsfahrzeugs beruhen, an mindestens eines der weiteren Beobachtungsfahrzeuge 4b, 4c, 4d gesendet:
Ausgesendete Information des ersten Beobachtungsfahrzeugs 4a:
Manöverraum: M1, M2, M3, M4
Pr (M = M1 | Beobachtung_1);
Pr (M = M2 | Beobachtung_1);
Pr (M = M3 | Beobachtung_1);
Pr (M = M4 | Beobachtung_1);
hash_Beobachtung_1;

Erhält das zweite Beobachtungsfahrzeug 4b eine Nachricht mit diesen Informationen des ersten Beobachtungsfahrzeugs 4a und kann eine weitere, hier zweite Beobachtung_2 beisteuern, berechnet es neue Gesamtwahrscheinlichkeitsverteilungen unter Berücksichtigung der bisherigen ersten Beobachtung_1 und seiner eigenen neuen, zweiten Beobachtung_2. Es sendet dann folgende Informationen aus:
Pr (M = M1 | Beobachtung_1, Beobachtung_2);
Pr (M = M2 | Beobachtung_1, Beobachtung_2);
Pr (M = M3 | Beobachtung_1, Beobachtung_2);
Pr (M = M4 | Beobachtung_1, Beobachtung_2);
hash_Beobachtung_1, hash_Beobachtung_2;

Erhält das dritte Beobachtungsfahrzeug 4c diese Informationen und kann es eine dritte Beobachtung_3 beisteuern, berechnet es neue Gesamtwahrscheinlichkeitsverteilungen für die vier Manöver unter Berücksichtigung der bisherigen Beobachtungen Beobachtung_1, Beobachtung_2 und seiner eigenen neuen dritten Beobachtung_3. Es versendet dann folgende Informationen:
Pr (M = M1 | Beobachtung_1, Beobachtung_2, Beobachtung_3);
Pr (M = M2 | Beobachtung_1, Beobachtung_2, Beobachtung_3);
Pr (M = M3 | Beobachtung_1, Beobachtung_2, Beobachtung_3);
Pr (M = M4 | Beobachtung_1, Beobachtung_2, Beobachtung_3);
hash_Beobachtung_1, hash_Beobachtung_2, hash_Beobachtung_3;

Eine iterative Entwicklung einer jeweiligen Gesamtwahrscheinlichkeitsverteilung für ein jeweiliges der insgesamt vier Manöver ist durch wiederholtes Anwenden der Bayes'schen Regel möglich.

Das vierte Beobachtungsfahrzeug 4d, das die Informationen mit der Nachricht des dritten Beobachtungsfahrzeugs 4c empfängt, kann dann bspw. seine vierte Beobachtung_4 in die Gesamtwahrscheinlichkeitsverteilung mit einrechnen.
Pr (M = M1 | Beobachtung_1, Beobachtung_2, Beobachtung_3, Beobachtung_4);
Pr (M = M2 | Beobachtung_1, Beobachtung_2, Beobachtung_3, Beobachtung_4);
Pr (M = M3 | Beobachtung_1, Beobachtung_2, Beobachtung_3, Beobachtung_4);
Pr (M = M4 | Beobachtung_1, Beobachtung_2, Beobachtung_3, Beobachtung_4);
hash_Beobachtung_1, hash_Beobachtung_2, hash_Beobachtung_3, hash_Beobachtung_4;

Durch Zufügen weiterer Beobachtungen wird die Qualität der Gesamtwahrscheinlichkeitsverteilung und damit die Qualität der Prädiktion verbessert.

Durch die Hashwerte hash_Beobachtung_1, hash_Beobachtung_2, hash_Beobachtung_3, hash_Beobachtung_4 wird sichergestellt, dass eine Beobachtung nicht mehrfach in die Berechnung einbezogen wird. Im gegebenen Beispiel wird also sichergestellt, dass bspw. das dritte beteiligte Beobachtungsfahrzeug 4c nicht erneut Beobachtung_1 und Beobachtung_2 einberechnet.

## Patentansprüche

1. Verfahren zum Vorhersagen eines Verhaltens eines Zielfahrzeugs (2) in einem Manöverraum, bei dem für das Zielfahrzeug (2) in dem Manöverraum mehrere zukünftig durchführbare Manöver vorgesehen werden, wobei das im Manöverraum befindliche Zielfahrzeug (2) von mehreren Beobachtungsfahrzeugen (4a, 4b, 4c, 4d) beobachtet wird, wobei für jedes zukünftig durchführbare Manöver des Zielfahrzeugs (2) von einem jeweiligen Beobachtungsfahrzeug (4a, 4b, 4c, 4d) eine Beobachtung durchgeführt wird, wobei auf Grundlage einer von einem jeweiligen Beobachtungsfahrzeug (4a, 4b, 4c, 4d) durchgeführten Beobachtung eine Einzelwahrscheinlichkeitsverteilung für das jeweils zukünftig durchführbare Manöver ermittelt wird, wobei für jedes zukünftig durchführbare Manöver des Zielfahrzeugs (2) aus mehreren Einzelwahrscheinlichkeitsverteilungen eine Gesamtwahrscheinlichkeitsverteilung für das jeweils zukünftig durchführbare Manöver des Zielfahrzeugs (2) ermittelt wird, wobei das Zielfahrzeug (2) von i Beobachtungsfahrzeugen (4a, 4b, 4c, 4d) beobachtet wird, wobei für das Zielfahrzeug (2) m Manöver vorgesehen werden, wobei für ein jeweiliges n-tes Manöver, mit 1 <= n <= m, eine Gesamtwahrscheinlichkeitsverteilung Pr (M = Mn | Beobachtung_1,..., Beobachtung_i) ermittelt wird, die auf i Beobachtungen beruht, wobei einzelne Einzelwahrscheinlichkeitsverteilungen sämtlicher Beobachtungsfahrzeuge (4a, 4b, 4c, 4d) über eine V2X-Kommunikation zwischen den einzelnen Beobachtungsfahrzeugen (4a, 4b, 4c, 4d) aufgesammelt und fusioniert werden, wobei eine Vorhersage des jeweiligen Manövers über die V2X-Kommunikation an manuell gesteuerte weitere Fahrzeuge übermittelt wird und somit die Gesamtwahrscheinlichkeitsverteilung für ein jeweiliges Manöver mit den weiteren manuell gesteuerten Fahrzeugen geteilt wird, wobei auf Grundlage der Gesamtwahrscheinlichkeitsverteilung in einem jeweiligen weiteren manuell gesteuerten Fahrzeug Warnhinweise bereitgestellt werden.

2. Verfahren nach Anspruch 1, bei dem von einem j-ten Beobachtungsfahrzeug (4a, 4b, 4c, 4d) aufgrund einer j-ten Beobachtung_j des Zielfahrzeugs (2), wobei 1 <= j <= i, eine j-te Einzelwahrscheinlichkeitsverteilung Pr (M = Mn | Beobachtung_j) für das n-te Manöver ermittelt und an ein weiteres j+1-tes Beobachtungsfahrzeug (4a, 4b, 4c, 4d) übermittelt wird, von dem unter Berücksichtigung einer j+1-ten Beobachtung_j+1 des Zielfahrzeugs (2) für das n-te Manöver eine j+1-te Gesamtwahrscheinlichkeitsverteilung Pr (M = Mn | Beobachtung_j, BeobachtungJ+1) ermittelt wird.

3. Verfahren nach Anspruch 1 oder 2, bei dem für jede durchgeführte Beobachtung, die von einem jeweiligen Beobachtungsfahrzeug (4a, 4b, 4c, 4d) bestimmt und für die Gesamtwahrscheinlichkeitsverteilung berücksichtigt worden ist, ein Hashwert bereitgestellt wird, mit dem darauf hingewiesen wird, dass diese Beobachtung bereits für die Gesamtwahrscheinlichkeitsverteilung berücksichtigt worden ist.

4. Verfahren nach einem der voranstehenden Ansprüche, bei dem das Zielfahrzeug (2) von den Beobachtungsfahrzeugen (4a, 4b, 4c, 4d) aus unterschiedlichen Perspektiven beobachtet wird.

5. Verfahren nach einem der voranstehenden Ansprüche, das von mindestens einem automatisch gesteuerten Beobachtungsfahrzeug (4a, 4b, 4c, 4d) für ein manuell gesteuertes Zielfahrzeug (2) durchgeführt wird.

6. Verfahren nach einem der voranstehenden Ansprüche, bei dem als mindestens ein Manöver eine Richtung einer Fahrt des Zielfahrzeugs (2) und/oder eine Geschwindigkeit des Zielfahrzeugs (2) berücksichtigt wird bzw. werden.

7. Verfahren nach einem der voranstehenden Ansprüche, bei dem die zu berücksichtigenden Manöver aus einer Anzahl möglicher Manöver ausgewählt werden.

8. System zum Vorhersagen eines Verhaltens eines Zielfahrzeugs (2) in einem Manöverraum, wobei das System (12) Sensoren (6), die in mehreren Beobachtungsfahrzeugen (4a, 4b, 4c, 4d) angeordnet sind, und mindestens eine Recheneinheit (8), die in mindestens einem Beobachtungsfahrzeug (4a, 4b, 4c, 4d) angeordnet ist, aufweist, wobei für das Zielfahrzeug (2) in dem Manöverraum mehrere zukünftig durchführbare Manöver vorgesehen sind, wobei jeweils mindestens ein Sensor (6) jedes Beobachtungsfahrzeugs (4a, 4b, 4c, 4d) dazu ausgebildet ist, das im Manöverraum befindliche Zielfahrzeug (2) zu beobachten, wobei von dem mindestens einen Sensor (6) des jeweiligen Beobachtungsfahrzeugs (4a, 4b, 4c, 4d) für jedes zukünftig durchführbare Manöver eine Beobachtung durchgeführt wird, wobei die mindestens eine Recheneinheit (8) dazu ausgebildet ist, für jedes zukünftig durchführbare Manöver des Zielfahrzeugs (2) auf Grundlage einer von dem mindestens einen Sensor (6) des jeweiligen Beobachtungsfahrzeugs (4a, 4b, 4c, 4d) durchgeführten Beobachtung eine Einzelwahrscheinlichkeitsverteilung für das jeweils zukünftig durchführbare Manöver zu ermitteln und weiterhin aus mehreren Einzelwahrscheinlichkeitsverteilungen eine Gesamtwahrscheinlichkeitsverteilung für das jeweils zukünftig durchführbare Manöver des Zielfahrzeugs (2) zu ermitteln, wobei das Zielfahrzeug (2) von i Beobachtungsfahrzeugen (4a, 4b, 4c, 4d) beobachtet wird, wobei für das Zielfahrzeug (2) m Manöver vorgesehen werden, wobei für ein jeweiliges n-tes Manöver, mit 1 <= n <= m, eine Gesamtwahrscheinlichkeitsverteilung Pr (M = Mn | Beobachtung_1,..., Beobachtung_i) ermittelt wird, die auf i Beobachtungen beruht, wobei einzelne Einzelwahrscheinlichkeitsverteilungen sämtlicher Beobachtungsfahrzeuge (4a, 4b, 4c, 4d) über eine V2X-Kommunikation zwischen den einzelnen Beobachtungsfahrzeugen (4a, 4b, 4c, 4d) aufgesammelt und fusioniert werden, wobei eine Vorhersage des jeweiligen Manövers über die V2X-Kommunikation an manuell gesteuerte weitere Fahrzeuge zu übermitteln und somit die Gesamtwahrscheinlichkeitsverteilung für ein jeweiliges Manöver mit den weiteren manuell gesteuerten Fahrzeugen zu teilen ist, wobei auf Grundlage der Gesamtwahrscheinlichkeitsverteilung in einem jeweiligen weiteren manuell gesteuerten Fahrzeug Warnhinweise bereitgestellt werden.

## Claims

1. A method for predicting a behavior of a target vehicle (2) within a maneuvering space, with which multiple maneuvers to be executed in the future within the maneuvering space are provided for the target vehicle (2), wherein the target vehicle (2) in the maneuvering space is observed by multiple observing vehicles (4a, 4b, 4c, 4d); wherein for each maneuver to be executed by the target vehicle (2) in the future, an observation is carried out by a respective observing vehicle (4a, 4b, 4c, 4d); wherein a single probability distribution is determined for the respective maneuver to be executed in the future on the basis of an observation carried out by a respective observing vehicle (4a, 4b, 4c, 4d), wherein for each maneuver which may be executed by the target vehicle (2) in the future, a total probability distribution is determined from multiple single probability distributions for the respective maneuver to be executed by the target vehicle (2) in the future, wherein the target vehicle (2) is observed by i observing vehicles (4a, 4b, 4c, 4d), wherein m maneuvers are provided for the target vehicle (2), wherein, based on i observations, a total probability distribution Pr (M = Mn | Observation_1,..., Observation_i) is determined for a respective nth maneuver, where 1 <= n <= m, wherein individual single probability distributions from all observing vehicles (4a, 4b, 4c, 4d) are collected and fused via a V2X communication between the individual observing vehicles (4a, 4b, 4c, 4d), wherein a prediction of the respective maneuver is transmitted to manually controlled additional vehicles via the V2X communication and the total probability distribution for a respective maneuver is thereby shared with the additional manually controlled vehicles, wherein warning notifications based on the total probability distribution are supplied in a respective additional manually controlled vehicle.

2. The method according to claim 1, in which a j-th single probability distribution Pr (M = Mn | Observation_j), wherein 1 <= j <= i, is determined by a j-th observing vehicle (4a, 4b, 4c, 4d) for the n-th maneuver based on a j-th Observation_j of the target vehicle (2) and transmitted to an additional j+1-th observing vehicle (4a, 4b, 4c, 4d), by which vehicle a j+1th total probability distribution Pr (M = Mn | Observation_j, ObservationJ+1) is determined for the n-th maneuver, taking into account a j+1th observation_j+1 of the target vehicle (2).

3. The method according to claim 1 or 2, wherein for each performed observation that has been determined by a respective observing vehicle (4a, 4b, 4c, 4d) and taken into account for the total probability distribution, a hash value is supplied with which notification is given that this observation has already been taken into account for the total probability distribution.

4. The method according to any of the preceding claims, wherein the target vehicle (2) is observed from different perspectives by the observing vehicles (4a, 4b, 4c, 4d).

5. The method according to any of the preceding claims, which is performed by at least one automatically controlled observing vehicle (4a, 4b, 4c, 4d) for a manually controlled target vehicle (2).

6. The method according to any of the preceding claims, wherein a direction of a travel of the target vehicle (2) and/or a speed of the target vehicle (2) is or are taken into account as at least one maneuver.

7. The method according to any of the preceding claims, wherein the maneuvers to be taken into account are selected from a number of possible maneuvers.

8. A system for predicting a behavior of a target vehicle (2) within a maneuvering space, wherein the system (12) has sensors (6) arranged in multiple observing vehicles (4a, 4b, 4c, 4d) and at least one computing unit (8) arranged in at least one observing vehicle (4a, 4b, 4c, 4d), wherein multiple maneuvers to be executed in the future within the maneuvering space are provided for the target vehicle (2), wherein at least one sensor (6) of each observing vehicle (4a, 4b, 4c, 4d) is configured to observe the target vehicle (2) located within the maneuvering space, wherein for each maneuver to be executed in the future, one observation is performed by the at least one sensor (6) of the respective observing vehicle (4a, 4b, 4c, 4d), wherein for each maneuver to be executed by the target vehicle (2) in the future, the at least one computing unit (8) is configured to determine a single probability distribution for the respective maneuver to be executed in the future, on the basis of an observation carried out by the at least one sensor (6) of the respective observing vehicle (4a, 4b, 4c, 4d), and furthermore to determine, from multiple single probability distributions, a total probability distribution for the respective maneuver to be executed by the target vehicle (2) in the future, wherein the target vehicle (2) is observed by i observing vehicles (4a, 4b, 4c, 4d), wherein m maneuvers are provided for the target vehicle (2), wherein a total probability distribution Pr (M = Mn | Observation_1,..., Observation_i) is determined, based on i observations, for a respective nth maneuver, where 1 <= n <= m, wherein individual single probability distributions of all observing vehicles (4a, 4b, 4c, 4d) are collected and fused via a V2X communication between the individual observing vehicles (4a, 4b, 4c, 4d), wherein a prediction of the respective maneuver is to be transmitted via the V2X communication to manually controlled additional vehicles and the total probability distribution for a respective maneuver is thereby to be shared with the additional manually controlled vehicles, wherein warning notifications based on the total probability distribution are supplied in a respective additional manually controlled vehicle.

## Revendications

1. Procédé de prédiction d'un comportement d'un véhicule cible (2) dans un espace de manoeuvre, dans lequel plusieurs futures manoeuvres sont prévues pour le véhicule cible (2) dans l'espace de manoeuvre, le véhicule cible (2) se trouvant dans l'espace de manoeuvre étant observé par plusieurs véhicules d'observation (4a, 4b, 4c, 4d), une observation étant effectuée par un véhicule d'observation respectif (4a, 4b, 4c, 4d) pour chaque future manoeuvre du véhicule cible (2), une distribution de probabilité individuelle pour la future manoeuvre étant déterminée sur la base d'une observation effectuée par un véhicule d'observation respectif (4a, 4b, 4c, 4d), une distribution de probabilité globale pour la future manoeuvre respective du véhicule cible (2) étant déterminée pour chaque future manoeuvre du véhicule cible (2) à partir de plusieurs distributions de probabilité individuelles, le véhicule cible (2) étant observé par i véhicules d'observation (4a, 4b, 4c, 4d), m manoeuvres étant prévues pour le véhicule cible (2), une distribution de probabilité globale Pr (M = Mn | observation_1, ..., observation_i) basée sur i observations étant déterminée pour une n-ième manoeuvre respective, où 1 <= n <= m, des distributions de probabilités individuelles de tous les véhicules d'observation (4a, 4b, 4c, 4d) étant collectées et fusionnées par le biais d'une communication V2X entre les différents véhicules d'observation (4a, 4b, 4c, 4d), une prédiction de la manoeuvre respective étant transmise moyennant la communication V2X à d'autres véhicules à commande manuelle et la distribution de probabilité globale pour une manoeuvre respective étant ainsi partagée avec les autres véhicules à commande manuelle, des avertissements étant mis à disposition sur la base de la distribution de probabilité globale dans un autre véhicule à commande manuelle respectif.

2. Procédé selon la revendication 1, dans lequel un j-ième véhicule d'observation (4a, 4b, 4c, 4d) détermine, sur la base d'une j-ième observation_j du véhicule cible (2), où 1 <= j <= i, une j-ième distribution de probabilité individuelle Pr (M = Mn | observation_j) pour la n-ième manoeuvre et la transmet à un autre j+1-ième véhicule d'observation (4a, 4b, 4c, 4d), à partir duquel, en tenant compte d'une j+1-ième observation_j+1 du véhicule cible (2), une j+1-ième distribution de probabilité globale Pr (M = Mn | observation_j, observation_j+1) est déterminée pour la n-ième manoeuvre.

3. Procédé selon la revendication 1 ou 2, dans lequel, pour chaque observation effectuée, déterminée par un véhicule d'observation respectif (4a, 4b, 4c, 4d) et prise en compte pour la distribution de probabilité globale, une valeur de hachage est fournie, indiquant que cette observation a déjà été prise en compte pour la distribution de probabilité globale,

4. Procédé selon l'une des revendications précédentes, dans lequel le véhicule cible (2) est observé par les véhicules d'observation (4a, 4b, 4c, 4d) sous différentes perspectives,

5. Procédé selon l'une des revendications précédentes, mis en oeuvre par au moins un véhicule d'observation à commande automatique (4a, 4b, 4c, 4d) pour un véhicule cible (2) à commande manuelle.

6. Procédé selon l'une des revendications précédentes, dans lequel au moins une manoeuvre prise en compte est une direction d'un trajet du véhicule cible (2) et/ou une vitesse du véhicule cible (2),

7. Procédé selon l'une des revendications précédentes, dans lequel les manoeuvres à prendre en compte sont sélectionnées parmi un certain nombre de manoeuvres possibles.

8. Système de prédiction d'un comportement d'un véhicule cible (2) dans un espace de manoeuvre, le système (12) présentant des capteurs (6) disposés dans plusieurs véhicules d'observation (4a, 4b, 4c, 4d) et au moins une unité de calcul (8) disposée dans au moins un véhicule d'observation (4a, 4b, 4c, 4d), plusieurs futures manoeuvres étant prévues pour le véhicule cible (2) dans l'espace de manoeuvre, au moins un capteur (6) de chaque véhicule d'observation (4a, 4b, 4c, 4d) étant conçu pour observer le véhicule cible (2) se trouvant dans l'espace de manoeuvre, une observation étant effectuée par l'au moins un capteur (6) du véhicule d'observation respectif (4a, 4b, 4c, 4d) pour chaque future manoeuvre, l'au moins une unité de calcul (8) étant conçue pour déterminer pour chaque future manoeuvre du véhicule cible (2), sur la base d'une observation effectuée par l'au moins un capteur (6) du véhicule d'observation respectif (4a, 4b, 4c, 4d), une distribution de probabilité individuelle pour la future manoeuvre respective et pour déterminer ensuite, à partir de plusieurs distributions de probabilités individuelles, une distribution de probabilité globale pour la future manoeuvre respective du véhicule cible (2), le véhicule cible (2) étant observé par i véhicules d'observation (4a, 4b, 4c, 4d), m manoeuvres étant prévues pour le véhicule cible (2), une distribution de probabilité globale Pr (M = Mn | observation_1, ..., observation_i), basée sur i observations, étant déterminée pour une n-ième manoeuvre respective, où 1 <= n <=m, des distributions de probabilités individuelles de tous les véhicules d'observation (4a, 4b, 4c, 4d) étant collectées et fusionnées par le biais d'une communication V2X entre les différents véhicules d'observation (4a, 4b, 4c, 4d), une prédiction de la manoeuvre respective devant être transmise moyennant la communication V2X à d'autres véhicules à commande manuelle et la distribution de probabilité globale pour une manoeuvre respective devant ainsi être partagée avec les autres véhicules à commande manuelle, des avertissements étant mis à disposition sur la base de la distribution de probabilité globale dans un autre véhicule respectif à commande manuelle respectif.
